# EUROPÄISCHE PATENTSCHRIFT

(11) **EP 1 623 889 B1**
(45) Veröffentlichungstag und Bekanntmachung des Hinweises auf die Patenterteilung: **01.10.2008**
(21) Anmeldenummer: 05016079.5
(22) Anmeldetag: 25.07.2005
(51) Int. Cl.: B60R 21/26

(54) **Gassackmodul für eine Fahrzeuginsassen-Rückhalteeinrichtung**
Airbag module for a vehicle occupant restraint device
Module de coussin gonflable pour un système de retenue d'un occupant de véhicule

(30) Priorität: 05.08.2004 DE 202004012303 U
(43) Veröffentlichungstag der Anmeldung: 08.02.2006
(73) Patentinhaber: TRW Automotive Safety Systems GmbH, 63743 Aschaffenburg (DE)
(72) Erfinder: Magoley, Marcus, Dr., 63739 Aschaffenburg (DE); Schneider, Michael, Dr., 63834 Sulzbach (DE)
(74) Vertreter: Strass, Jürgen

(56) Entgegenhaltungen:
- EP-A- 1 288 083
- DE-U1- 20 200 365
- DE-U1- 20 310 575
- US-A- 3 618 980
- US-A- 4 178 017
- US-A- 6 082 765

## Beschreibung

Die Erfindung betrifft ein Gassackmodul für eine Fahrzeuginsassen-Rückhaltevorrichtung nach dem Oberbegriff des Anspruchs 1.

Mit dem vom Gasgenerator erzeugten Gas soll ein Gassack möglichst schnell befüllt werden. Unter bestimmten Umständen ist es aber wünschenswert, daß der Gassack nicht mit dem gesamten zur Verfügung gestellten Gasvolumen befüllt wird. Für solche Fälle können im Gassackmodul Abströmöffhungen vorgesehen sein, durch deren Freigabe der Druck im Gassack begrenzt werden kann. Ein solches Gassackmodul ist beispielsweise aus der US 2004/0051286 A1 bekannt.

Ferner ist es aus der DE 198 06 773 A1 bekannt, das vom Gasgenerator bereitgestellte Gasvolumen nicht direkt in den Gassack, sondern zunächst einer Vorkammer mit einem Gasstromsteuerungsmittel zuzuführen, mit dem die Intensität und/oder die Richtung des Gasvolumenstroms beeinflußt werden kann.

Die US 6 183 007 zeigt einen Gasgenerator mit einem Diffusor, der mehrere Ausströmöffnungen aufweist, die dem austretenden Gas unterschiedliche Strömungsrichtungen vorgeben, um eine gleichmäßige Befüllung des Gassacks zu gewährleisten.

Aus der US 6 082 765 A ist ein Gassackmodul bekannt, bei dem ein am Modulgehäuse befestigter Deflektor das aus dem den Gasgenerator umgebenden beweglichen Käfigteil austretende Gas zu Ausströmöffnungen lenkt, die im Modulgehäuse gebildet sind, bis sich der Käfig axial vom Gasgenerator entfernt.

Weitere Gassackmodule mit Gasleitvorrichtungen sind bekannt aus der EP 1 288 083 A2 (Strömungskanäle an längsseitigen Gehäusewänden der Gassackkammer eines Beifahrergassackmoduls), DE 203 10 575 U1 (Gasleitflächen leiten aus Gasgenerator austretendes Gas unter Vermeidung von Turbulenzen zu Auslässen, die in den Gassack münden), DE 202 00 365 U1 (Erhebung in der Mantelfläche eines Generatorträgers eine Seitenairbagmoduls dient als Leitelement, mit dem die Richtung des aus der Ausströmöffnung austretenden Gasstroms beeinflußbar ist), US 3 618 980 A (über dem Gasgenerator angeordneter Deflektor mit gekrümmten Lamellen leitet Gas und Festpartikel auf eine Außenwand einer Material-Einschlußkammer), und US 4 178 017 A (am Gehäuse des Gasgenerators außen angebrachte Leitbleche klappen radial nach außen, wenn Gas aus dem Gasgenerator strömt).

Gassackmodule mit den Merkmalen des Oberbegriffs des Anspruchs 1 sind in der DE 100 48 953 A1 und in der DE 101 42 598 A1 gezeigt. Bei diesen Modulen sind Gasleitvorrichtungen vorgesehen, die neben einem gleichmäßigen Einströmen von Gas in den Gassack auch zur Befestigung des Gassacks im Modul dienen.

Aufgabe der Erfindung ist es, eine vorteilhafte Strömung des aus dem Gasgenerator austretenden Gases zu erreichen.

Dies wird durch ein Gassackmodul mit den Merkmalen des Anspruchs 1 erreicht. Die Erfindung beruht auf der Erkenntnis, daß sich eine laminare Strömung des bereitgestellten Gases im Vergleich zu einer turbulenten Strömung positiv auf die Hitzebeständigkeit der angrenzenden Bauteile des Gassackmoduls auswirkt. Die erfindungsgemäße Gasleitvorrichtung schafft die Voraussetzungen für eine solche Strömungsform. Die Gasleitvorrichtung sorgt außerdem dafür, daß das Gas auch im weiteren Strömungsverlauf ein gewünschtes Verhalten bezüglich Strömungsrichtung und -art zeigt. Die Erfindung betrifft den Anwendungsfall, wenn ein Teil des erzeugten Gases zur Begrenzung des Gassackdrucks abgeleitet werden soll. Das erfindungsgemäße Gassackmodul weist eine freigebbare Abströmöffnung auf, durch die Gas aus dem Gassackmodul abströmen kann, wobei die Gasleitvorrichtung so ausgelegt ist, daß sie wenigstens einen Teil des aus dem Gasgenerator ausgetretenen Gases zur Abströmöffnung lenkt. Somit kann bei einer Freigabe der Abströmöffnung das Gas über den durch die Gasleitvorrichtung vorgegebenen Wegverlauf kontrolliert aus dem Gassackmodul befördert werden.

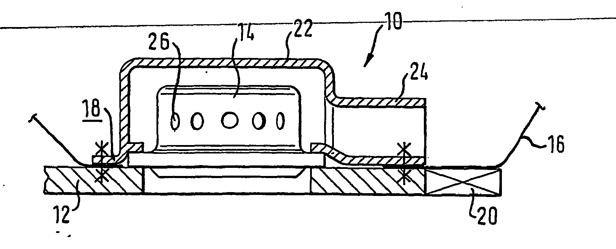

Weitere Merkmale und Vorteile der Erfindung ergeben sich aus der nachfolgenden Beschreibung und aus der beigefügten Zeichnung, auf die Bezug genommen wird. In der Zeichnung zeigt die einzige Figur eine seitliche Schnittansicht eines erfindungsgemäßen Gassackmoduls.

In der Figur ist schematisch ein Gassackmodul 10 mit einem auf einem Generatorträger 12 befestigten Gasgenerator 14 und einem Gassack 16 dargestellt. Der Gassack 16 ist zwischen einem Gassackhalteblech 18 und dem Generatorträger 12 eingeklemmt. Im Generatorträger 12 ist eine Abströmöffnung 20 vorgesehen, die bei Bedarf freigegeben werden kann, um ein Abströmen von Gas zu ermöglichen. Der Gasgenerator 14 ist von einem Käfig 22 umgeben, der bei dem dargestellten Ausführungsbeispiel einstückig mit dem Gassackhalteblech 18 ausgebildet ist. Der Käfig 22 weist eine Gasleitvorrichtung in Form eines Kanals 24 auf, der zur Abströmöffnung 20 führt.

Dem vom Gasgenerator 14 erzeugten Gas, das radial aus Ausströmöffnungen 26 austritt, wird durch den Kanal 24 eine vorbestimmte, einheitliche Strömungsrichtung aufgezwungen. Der Kanal 24 lenkt das Gas gezielt zur Abströmöffnung 20 und sorgt für eine im wesentlichen laminare Strömung des Gases. Solange die Abströmöffnung 20 freigegeben ist, kann ein Teil des vom Gasgenerator 14 erzeugten Gases aus dem Modul 10 austreten, ohne daß dieser Teil des Gases zur Befüllung des Gassacks 16 beiträgt. Solange die Abströmöffnung 20 geschlossen ist, strömt das Gas im wesentlichen laminar in den Gassack 16.

Zum gewünschten Strömungsverhalten können auch Anordnung, Anzahl und Größe der Ausströmöffnungen des Gasgenerators und/oder des Käfigs beitragen.

## Patentansprüche

1. Gassackmodul für eine Fahrzeuginsassen-Rückhaltevorrichtung, mit einem Gasgenerator (14) zum Befüllen eines Gassacks (16) und einer innerhalb des Moduls (10) angeordneten Gasleitvorrichtung, die wenigstens einem Teil des aus dem Gasgenerator (14) ausgetretenen Gases eine vorbestimmte, einheitliche Strömungsrichtung aufzwingt und wenigstens teilweise durch geeignete Formgebung eines Gassackhalteblechs (18) des Gassackmoduls (10) gebildet ist, wobei das Gassackhalteblech (18) einstückig mit einem Käfig (22) ausgebildet ist, der den Gasgenerator (14) umgibt, **dadurch gekennzeichnet, daß** das Gassackmodul (10) eine freigebbare Abströmöffnung (20) aufweist, durch die Gas aus dem Gassackmodul (10) abströmen kann, und daß die Gasleitvorrichtung so ausgelegt ist, daß sie wenigstens einen Teil des aus dem Gasgenerator (14) ausgetretenen Gases zur Abströmöffnung (20) lenkt.

2. Gassackmodul nach Anspruch 1, **dadurch gekennzeichnet, daß** die Gasleitvorrichtung wenigstens ein Leitblech (28; 30, 32; 34) oder ein entsprechendes Bauteil aus Kunststoff umfaßt.

3. Gassackmodul nach Anspruch 1 oder 2, **dadurch gekennzeichnet, daß** die Gasleitvorrichtung wenigstens teilweise durch geeignete Formgebung von Austrittskanälen (36) des Gasgenerators (14) gebildet ist.

## Claims

1. A gas bag module for a vehicle occupant restraint device, comprising a gas generator (14) for filling a gas bag (16), and a gas conduit device which is arranged inside the module (10) and which forces a predetermined, uniform flow direction on at least a portion of the gas that has emerged from the gas generator (14), and which is formed at least partly by suitable shaping of a gas bag holding plate (18) of the gas bag module (10), the gas bag holding plate (18) being constructed in one piece with a cage (22) surrounding the gas generator (14), **characterized in that** the gas bag module (10) has a releasable discharge opening (20) to allow gas to flow out from the gas bag module (10), and that the gas conduit device is designed such that it directs at least a portion of the gas that has emerged from the gas generator (14) to the discharge opening (20).

2. The gas bag module according to claim 1, **characterized in that** the gas conduit device includes at least one baffle plate (28; 30, 32; 34) or a corresponding component made of plastic.

3. The gas bag module according to claim 1 or 2, **characterized in that** the gas conduit device is formed at least partly by suitable shaping of outlet channels (36) of the gas generator (14).

## Revendications

1. Module de coussin à gaz pour un dispositif de retenue de passagers de véhicule, comportant un générateur de gaz (14) pour remplir un coussin à gaz (16) et un dispositif de conduite de gaz agencé à l'intérieur du module (10), lequel impose à au moins une partie du gaz sortant du générateur de gaz (14) une direction d'écoulement uniforme prédéterminée et qui est formé au moins partiellement par un façonnage approprié d'une tôle de retenue (18) de coussin à gaz du module de coussin à gaz (10), la tôle de retenue (18) de coussin à gaz étant réalisée d'un seul tenant avec une cage (22) qui entoure le générateur de gaz (14), **caractérisé en ce que** le module de coussin à gaz (10) présente un orifice d'échappement (20) susceptible d'être libéré, à travers lequel le gaz peut s'échapper hors du module de coussin à gaz (10), et **en ce que** le dispositif de conduite de gaz est conçu de telle sorte qu'il dirige au moins une partie du gaz sortant du générateur de gaz (14) vers l'orifice d'échappement (20).

2. Module de coussin à gaz selon la revendication 1, **caractérisé en ce que** le dispositif de conduite de gaz comprend au moins une tôle de chicane (28 ; 30, 32 ; 34) ou un composant correspondant en matière plastique.

3. Module de coussin à gaz selon la revendication 1 ou 2, **caractérisé en ce que** le dispositif de conduite de gaz est formé au moins en partie par un façonnage approprié de canaux de sortie (36) du générateur de gaz (14).
